# EUROPEAN PATENT APPLICATION

(11) **EP 4 631 910 A1**
(43) Date of publication of application: **15.10.2025**
(21) Application number: 24169035.3
(22) Date of filing: 08.04.2024
(51) Int. Cl.: C01B 3/02, C01B 3/38, C01B 3/48

(54) **HYDROGEN OR AMMONIA PROCESS AND PLANT**

(71) Applicant: CASALE SA, 6900 Lugano (CH)
(72) Inventor: GENOVA, Giovanni, 22100 Como (IT); SASSI, Fabio, 21040 Vedano Olona (VA) (IT); MOREO, Pietro, 6900 Lugano (CH)
(74) Representative: M. Zardi & Co S.A.

(57) **Abstract**

A process and a plant for the production of hydrogen or for the synthesis of ammonia, said process comprising the following steps:
(a) performing a reforming process (101) of a hydrocarbon feedstock (1) to generate a raw syngas (2), said reforming process comprising at least an autothermal reforming step (104) in presence of oxygen-enriched air or pure oxygen (3) produced by an air separation unit (ASU; 103);
(b) subjecting said raw syngas (2) to a post-treatment (102) providing hydrogen (H₂; 4), a CO₂-enriched stream (5), and a residual gas (6); said post-treatment comprising at least a water gas shift conversion step (105) of said raw syngas into a shifted syngas (7), a pressure swing absorption step (106), and a cryogenic separation step (107); wherein said pressure swing absorption step produces said hydrogen and a first tail gas (8) comprising carbon monoxide (CO), carbon dioxide (CO₂), residual hydrogen (H₂) and unreacted hydrocarbon feedstock from the shifted syngas (7), and said cryogenic separation step separates the CO₂-enriched stream and a second tail gas (9) from said first tail gas;
said post-treatment (102) comprising a further separation step (120) of a CO₂-containing stream (11) and of the residual gas (6) from said second tail gas;
(c) recycling said residual gas (6) as feed to said reforming process and/or as fuel to one or more fired heater(s) (10) of said process;
(d) optionally feeding a portion (4.8) of said hydrogen (4) obtained in step (b) as fuel to one or more fired heater(s) of said process;
(e) optionally an ammonia synthesis step (110) wherein said hydrogen (4) and a nitrogen (N₂)-containing stream (12) produced by said ASU (103) are reacted in a given stoichiometric ratio and in ammonia (NH₃) synthesis conditions to obtain an ammonia-containing product (13).

## Description

### Field of application

The invention is in the field of hydrogen production or ammonia synthesis. The invention particularly pertains to a process and a plant for the production of hydrogen or for the synthesis of ammonia from a hydrocarbon feedstock.

### Prior art

The industrial production of hydrogen (H₂) typically starts with the production of synthesis gas (*"syngas"*) which is obtained by treating a hydrocarbon feedstock in a reforming section which may include a pre-reformer reactor and an autothermal reformer or, as an alternative, a steam reformer.

Syngas is a gaseous mixture comprising carbon monoxide (CO), hydrogen and minor amounts carbon dioxide (CO₂) and methane (CH₄).

Syngas obtained by reforming is subjected to dedicated treatments including water gas shift conversion wherein CO is converted to CO₂ and H₂ in presence of water (steam), and hydrogen purification wherein hydrogen is separated from unconverted compounds, e.g. CO, CO₂ and CH₄.

Hydrogen plants based on reforming technologies are also provided with one or more fired heater(s) which is/are used to fulfill the thermal duties of the plant, e.g., by supplying heat to the pre-reformer and to the autothermal reformer feed streams.

In the art there is a growing interest in minimizing CO₂ emissions (*"carbon footprint"*) of hydrogen plants especially in view of the continuously evolving regulations concerning greenhouse gases.

Several solutions are available to reduce the CO₂ emissions from a hydrogen plant but the most applied solution is to capture the carbon dioxide from the synthesis gas and to store the sequestrated CO₂ underground.

Unfortunately, the carbon dioxide sequestrated from the synthesis gas only addresses a limited fraction of the total carbon dioxide emissions of the plant. In practice, the CO₂ emitted from the plant is the sum of several contributions including the CO₂ generated by chemical conversion of the hydrocarbons into syngas but also the CO₂ generated by the operation of the auxiliary systems of the plant, e.g., of the fired heater(s). This latter contribution is not negligible and is seldom taken into consideration in the art.

### Summary of the invention

The invention aims to overcome the above drawbacks of the prior art. In particular, the present invention aims at reducing the CO₂ emissions from hydrogen and ammonia plants.

Accordingly, one aspect of the present invention is a process for the production of hydrogen or for the synthesis of ammonia comprising the flowing steps:
(a) performing a reforming process of a hydrocarbon feedstock to generate a raw syngas, said reforming process comprising at least an autothermal reforming step in presence of oxygen-enriched air or pure oxygen produced by an air separation unit (ASU);
(b) subjecting said raw syngas to a post-treatment providing hydrogen (H₂), a CO₂-enriched stream, and a residual gas; said post-treatment comprising at least a water gas shift conversion step of said raw syngas into a shifted syngas, a pressure swing absorption step, and a cryogenic separation step;
   wherein said pressure swing absorption step produces said hydrogen and a first tail gas comprising carbon monoxide (CO), carbon dioxide (CO₂), residual hydrogen (H₂) and unreacted hydrocarbon feedstock from the shifted syngas, and said cryogenic separation step separates the CO₂-enriched stream and a second tail gas from said first tail gas;
   said post-treatment comprising a further separation step of a CO₂-containing stream and of the residual gas from said second tail gas;
(c) recycling said residual gas as feed to said reforming process and/or as fuel to one or more fired heater(s) of said process;
(d) optionally feeding a portion of said hydrogen obtained in step (b) as fuel to one or more fired heater(s) of said process;
(e) optionally an ammonia synthesis step wherein said hydrogen 4 and a nitrogen (N₂)-containing stream produced by said ASU are reacted in a given stoichiometric ratio and in ammonia (NH₃) synthesis conditions to obtain an ammonia-containing product.

A further aspect of the invention is a plant for the production of hydrogen or for the synthesis of ammonia comprising:
- an air separation unit (ASU) configured to produce oxygen-enriched air or pure oxygen;
- a reforming section configured to convert a hydrocarbon feedstock into a raw syngas in presence of said oxygen-enriched air or pure oxygen, wherein said reforming section comprises at least an autothermal reformer (ATR);
- a post-treatment section configured to provide hydrogen (H₂), a CO₂-enriched stream, and a residual gas;
   said post-treatment section comprising at least a water gas shift conversion reactor of said raw syngas into a shifted syngas, a pressure swing absorption unit, and a cryogenic separation unit;
   wherein said pressure swing absorption unit is arranged for producing said hydrogen and a first tail gas comprising carbon monoxide (CO), carbon dioxide (CO₂), residual hydrogen (H₂) and unreacted hydrocarbon feedstock from the shifted syngas, and said cryogenic separation unit is configured to separate the CO₂-enriched stream and a second tail gas from said first tail gas;
   said post-treatment section comprising a further separation unit arranged for separating a CO₂-containing stream and the residual gas from said second tail gas;
- one or more lines for recycling said residual gas as feed to said reforming section and/or as fuel to one or more fired heater(s) of said plant;
- optionally one or more lines for feeding a portion of said hydrogen as fuel to one or more fired heater(s) of said plant;
- optionally an ammonia synthesis section arranged for reacting said hydrogen and a nitrogen (N₂)-containing stream produced by said ASU in a given stoichiometric ratio and in ammonia (NH₃) synthesis conditions to obtain an ammonia-containing product.

The invention provides an efficient way to produce hydrogen or ammonia from a carbon feedstock, such as natural gas, meanwhile keeping the emissions of greenhouse gases (such as carbon dioxide or methane) as low as possible.

### Advantages of the invention

Advantageously, recycling of the residual gas as feed and/or as fuel allows operating the plant or process with a low steam-to-carbon ratio (S/C ratio) since it is no longer required to reach a low slip of carbon monoxide and methane from the reforming section.

Advantageously, operation with a low S/C ratio at the inlet of the pre-reformer allows to decrease the oxygen consumption of the autothermal reformer, the duty of the fired-heater and the duty of waste heat boiler, located downstream of the ATR and, in general, the size of the whole steam system of the plant. The fact that the duty of the fired-heater is decreased leads to a reduced carbon intensity of the present process and plant and a reduced consumption of fuel in the fired heater.

Advantageously, recycling of the residual gas as feed and/or as fuel allows operating the plant or performing the process with a low steam-to-carbon ratio (S/C ratio) since it is no longer required to reach a low slip of carbon monoxide and methane from the reforming section.

Advantageously, the further separation step or unit allows to maximize CO₂ recovery and, thus, to send a gas with a minimum content carbon dioxide to reforming. This is possible due to recirculating of a CO₂-rich stream upstream of the cryogenic separation that enriches in CO₂ the stream fed to cryogenic separation and promotes fractionation of carbon dioxide from other components (CH₄, H₂, CO, N₂, etc.).

Advantageously, the sources of carbon emissions generated in the process or plant are reduced or eliminated during post-treatment, e.g. since a portion of the hydrogen may be used as fuel in one or more fired heater(s).

Advantageously, operation with a low S/C ratio at the inlet of the pre-reformer together with the provision of a gas heater reformer in parallel with the autothermal reformer allows to further significantly decrease the oxygen consumption of the autothermal reformer, the duty of the fired-heater and the duty of waste heat boiler, located downstream of the gas heater reformer and, in general, the size of the whole steam system as well as process line of the plant. The fact that the duty of the fired-heater is further decreased leads to a reduced carbon intensity of the present process and plant and a reduced consumption of fuel in the fired heater.

The fact that part of the duty generated in the ATR is exploited in the gas heated reformer allows to decrease also the feed gas consumption with the advantage of a smaller plant size for a given capacity as well as reduced "Scope 3" emissions (i.e. emission related to natural gas extraction and transport). The plant size can be reduced up to 15%.

Furthermore, advantageously, the size of the ASU can be further reduced up to 20%.

In practice advantageous embodiments of the present invention allow to reduce the duty of the fired heater, the duty of waste heat boiler, located downstream of the ATR or gas heater reformer and, in general, the size of the whole steam system of the plant, the size of the process line, the size of the ASU and recycle most of the unconverted carbon back to process. Overall, the emissions of CO₂ from the plant are reduced and the efficiency of the plant is increased. Further also the Capex of the plant are reduced, mainly as consequence of the reduction in size of the ASU, of waste heat boiler, located downstream ATR or gas heater reformer and, in general, of the size of the whole steam system of the plant as well as process line and of the fired heater.

According to a further advantageous aspect of the plant and process of the present invention, the recycle of the residual gas as feed to the autothermal reformer, or to the gas-heated reformer and to the autothermal reformer, the parallel arrangement of the autothermal reformer and of the gas-heated reformer, and the intimate mixing of the streams of syngas performed in this latter, allow to achieve high conversions of the hydrocarbon feedstock without the drawback of increasing carbon dioxide emissions.

The above advantages are especially tangible when the ATR is operated at low S/C ratios (e.g., comprised from 0.7 to 1.5). These S/C ratios are not used in once through systems equipped with a primary reformer followed by an ATR in series, which require higher S/C ratios (from 2 to 4) and lead to consequent higher carbon intensity.

Thanks to the invention, a high purity hydrogen can be produced and the carbon intensity of the process and plant can be reduced to a desirable value of 0.1 kg CO₂/ kg H₂ or even less.

Advantageously, the process and plant of the present invention allow to recover heat efficiently.

Advantageously, the presence of a saturation step or unit has the advantage of reducing an amount of process condensate to be treated in downstream process condensate stripper and polisher.

Advantageously, the presence of a saturation step or unit allows to reduce the medium pressure steam requirement with consequent energy savings.

Advantageously, the embodiments with a downstream PSA allow to increase a hydrogen product yield.

Advantageously, the embodiments with a downstream membrane separation allow to produce low carbon fuel hydrogen that can be used in the fired heater(s) in place of the hydrogen product thereby increasing the plant yield per pass.

### Description of the preferred embodiments of the invention

Hydrogen 4 produced in the process or plant may have a purity preferably higher than 95%, more preferably higher than 99%.

According to an embodiment, at least part 4.B of such hydrogen 4 can be fed as fuel to the one or more fired heater(s) 10.

According to another embodiment, such hydrogen 4 can be fed as a reagent for the synthesis of an ammonia-containing product 13.

According to still another embodiment, said given stoichiometric ratio H₂/N₂ for ammonia synthesis is comprised from 2.9 to 3.1.

Preferably, the hydrocarbon feedstock is natural gas.

According to a preferred embodiment, in step (c) a first amount 6.A of said residual gas 6 is recycled as feed to said reforming process 101 and a second amount 6.B of said residual gas 6 is recycled as fuel to said one or more fired heater(s) 10.

According to an embodiment, a hydrocarbon fuel 1.B - such as natural gas - can be fed as complementary fuel to the one or more fired heater(s) 10.

Volumetric flow rates of said first amount to said second amount are preferably in a ratio comprised from 1:200 to 200:1, more preferably comprised from 1:100 to 100:1, even more preferably comprised from 1:50 to 50:1, still more preferably comprised from 1:25 to 25:1.

According to an embodiment, said further separation step 120 of the CO₂-containing stream 11 in step (b) comprises at least a further pressure swing absorption step 108.

According to another embodiment, said further separation step 120 of the CO₂-containing stream 11 in step (b) comprises an upstream pressure swing absorption step 108 and a downstream pressure swing absorption step 117, or an upstream pressure swing absorption step 108 and a downstream membrane separation step 118.

Preferably, input of said downstream pressure swing absorption step 117 or of said membrane separation step 118 is the residual gas 6 of the upstream pressure swing absorption step 108, and said downstream pressure swing absorption step 117 or said membrane separation step 118 is arranged to split such residual gas 6 into a further residual gas 31 and a third tail gas 32.

Said further tail gas 32 is preferably recycled as feed to said reforming process, more preferably after compression 119 (e.g. in a compressor) as a compressed tail gas 35. This embodiment is particularly preferred in presence of the downstream pressure swing absorption step 117.

The further residual gas 31 may be sent as fuel to said one or more fired heater(s) 10 of said process. A portion or all of the further residual gas 31 be used as a hydrogen product and eventually joined with hydrogen 4. This embodiment is particularly preferred in presence of the downstream pressure swing absorption step 117.

According to another embodiment, an amount of further steam 24 may be injected upstream of the water gas shift conversion in order to reach an oxygen to carbon ratio (O/C ratio) comprised from 2.25 to 3, preferably comprised from 2.25 to 2.5.

Preferably, said CO₂-containing stream is at least partially mixed with said first tail gas 8 to give a mixed stream 14. Said mixed stream may be fed to said cryogenic separation step 107, preferably after compression and drying.

Consequently, according to another embodiment, said post-treatment 102 comprises at least a compression step 109 and a drying step 111 of said first tail gas 8 or, optionally, of said mixed stream 14 upstream of said cryogenic separation step 107. Such compression step 109 may be single-stage or multistage.

Preferably, the drying step 111 is performed in a dryer 111. More preferably, said dryer comprises one or more molecular sieve drying units.

According to an embodiment, the shifted syngas 7 is subjected to an indirect heat exchange step 112 for cooling followed by a separation step 113 to obtain a liquid condensate 15 and a gaseous stream 16. The gaseous stream may be fed to the pressure swing absorption step 106 of step (b). According to a first embodiment, the liquid condensate 15 may be exported from the post-treatment section 102. According to a second embodiment, at least part the liquid condensate 15 may be used as a make-up stream for a saturation step 121 of said hydrocarbon feedstock 1 after desulphurization (i.e. of a desulphurized hydrocarbon feedstock 25) to obtain a saturated hydrocarbon feedstock 34.

Preferably, said shifted syngas 7 and at least part of said liquid condensate 15 are heat exchanged in an indirect heat exchanger 112 so that the liquid condensate 15 is heated by the (cooling) shifted syngas 7. The resulting heated liquid condensate 33 is fed as saturation liquid to said saturation step 121 performed on the hydrocarbon feedstock 1 after desulphurization.

As an option, said heated liquid condensate 33 may be fed to the indirect heat exchanger 112 after the saturation step 121 and then be recycled to the saturation step 121.

The reforming process 101 is preferably preceded by a desulphurisation step 114, preferably a hydro-desulphurisation step, of the hydrocarbon feedstock 1. The desulphurisation step 114 is preferably performed in a catalytic reactor.

According to a preferred embodiment, the reforming process 101 further comprises a pre-reforming step 115 upstream to said autothermal reforming step 104 and upstream of an optional gas-heated reforming step. The pre-reforming step 115 follows (e.g., immediately) the desulphurisation step 114 of the hydrocarbon feedstock 1.

Preferably, the pre-reforming step 115 is an adiabatic pre-reforming step.

According to different embodiments, a steam to carbon ratio at the inlet of the pre-reforming step is not greater than 1.5, more preferably comprised from 0.5 to 1.5 or, and even more preferably comprised from 0.6 to 0.9 or 0.7 to 1.2, for example of about 0.8.

Preferably, said process comprises a step of injecting steam 19 upstream or at the inlet of said gas-heated reforming step or gas-heated reformer 116 to achieve a steam to carbon ratio at the inlet of the gas-heated reforming step greater than 2, preferably comprised from 2 to 6, more preferably comprised from 4.5 to 5.5.

According to a preferred embodiment, said reforming process 101 comprises a gas-heated reforming step 116 carried out in parallel with said autothermal reforming step 104.

According to another preferred embodiment, the process comprises splitting said hydrocarbon feedstock 1 into a first feedstock portion 17, 17' and into a second feedstock portion 18, 18', said autothermal reforming step 104 being performed on said first feedstock portion and said gas-heated reforming step 116 being performed on said second feedstock portion, whereby heat is transferred from said autothermal reforming step to said gas-heated reforming step.

Preferably, said first feedstock portion 17, 17' comprises from 70 vol% to 98 vol% of the hydrocarbon feedstock 1.

According to different embodiments, said hydrocarbon feedstock 1 may be split as desulphurized hydrocarbon feedstock 25 into the first feedstock portion 17' and into the second feedstock portion 18'.

The process preferably comprises transferring heat 30 from said one or more fired heater(s) 10 to the desulphurisation step 114 of the hydrocarbon feedstock 1, and/or to the pre-reforming step 115 upstream to said autothermal reforming step 104, and/or to said autothermal reforming step 104. The one or more fired heater(s) 10 are therefore used to fulfil the thermal duty of the process or plant.

Preferred embodiments of the plant are as listed herein below. However, since the plant is designed for implementing the above process, preferred embodiments of the process are applicable - *mutatis mutandis* - also to the plant even if not expressly described.

According to an embodiment, a first line is arranged for recycling a first amount 6.A of said residual gas 6 as feed to said reforming process and, optionally, a second line is arranged for recycling a second amount 6.B (if needed) of said residual gas 6 as fuel to said one or more fired heater(s) 10 and, more precisely, as fuel to one or more burner(s) of said fired heater(s). Depending on the required product purity, the residual gas 6 may be fully recycled back as feed to said reforming process (first amount 6.A = 100 %vol).

Preferably, said first amount 6.A of residual gas 6 is recycled as feed exclusively to said autothermal reforming step 104 or exclusively to said gas-heated reforming step 116.

According to another embodiment, said first amount 6.A of residual gas 6 is recycled as feed partially to said autothermal reforming step 104 and partially to said gas-heated reforming step 116. E.g. the part recycled to said autothermal reforming step 104 may be comprised from 10%vol to 96%vol, preferably comprised from 50%vol to 95%vol, more preferably comprised from 60%vol to 90%vol, even more preferably comprised from 75%vol to 85%vol, of said first amount 6.A.

Preferably, the further separation unit 120 comprises at least a further pressure swing absorption unit 108.

The plant may comprise a line for mixing at least part of said CO₂-containing stream 11 with said first tail gas 8 to give a mixed stream 14 feeding said cryogenic separation unit 107.

Preferably, the CO₂-containing stream 11 and the first tail gas may be mixed at a suction side of a compressor 109 feeding the cryogenic separation unit 107

According to an embodiment, said cryogenic separation unit 107 is a CO₂ cryogenic fractionation process equipped with a suitable refrigeration unit.

According to a preferred embodiment, said reforming section 101 comprises a gas-heated reformer 116 arranged in parallel with said autothermal reformer 104.

Preferably, said autothermal reformer 104 is arranged to receive a first feedstock portion 17, 17' of said hydrocarbon feedstock 1 and to generate a first stream of syngas 20.

More preferably, said gas-heated reformer comprises a first side 22 and a second side 23, wherein said gas-heated reformer is arranged to receive a second feedstock portion 18, 18' of said hydrocarbon feedstock 1 in said first side and to generate a second stream of syngas 21 in the same side.

Said first stream of syngas and said second stream of syngas are preferably mixed in said second side (i.e. within the gas-heated reformer) to generate said raw syngas 2.

The gas-heated reformer 116 is preferably a shell and tube reformer. More preferably said first side 22 is a tube side and said second side 23 is a shell side.

According to a possible embodiment, the gas-heated reformer 116 comprises a reaction vessel 26 enclosing the first side 22 and the second side 23. The first side 22 preferably contains a catalyst for conversion of the feedstock 18, 18' into the second stream of syngas 21. The second side 23 is arranged to surround the first side 22.

Preferably, the first side 22 and the second side 23 are arranged so that fluid traversing the first side 22 can exchange heat with fluid traversing the second side 23. Particularly, in operation, heat is transferred from the fluid in the second side (hot side) to the fluid in the first side. The first side is in fluid communication with the second side so that the synthesis gas effluent of the first side enters into the second side. The second side of the reformer is supplied, together with the synthesis gas effluent of the first side, with the synthesis gas output of the autothermal reforming section so as to mix with the synthesis gas of this latter and thereby generate a combined synthesis gas in the second side. This combined synthesis gas is the output of the reforming section making the raw syngas 2.

### Description of the figures

Fig. 1, Fig. 2, Fig. 3 show schematic representations of processes or plants according to preferred embodiments of the invention;
Fig. 4 is a schematic representation of a post-treatment step or section according to an embodiment of the invention;
Fig. 5 is a diagram of an ATR and GHR in a parallel arrangement according to an embodiment of the invention;
Fig. 6 and Fig. 7 are a schematic representations of post-treatment steps or sections according to other embodiments of the invention;
Fig. 8 is a schematic representation of a post-treatment step or section according to still another embodiment of the invention.

### Detailed description of the preferred embodiments

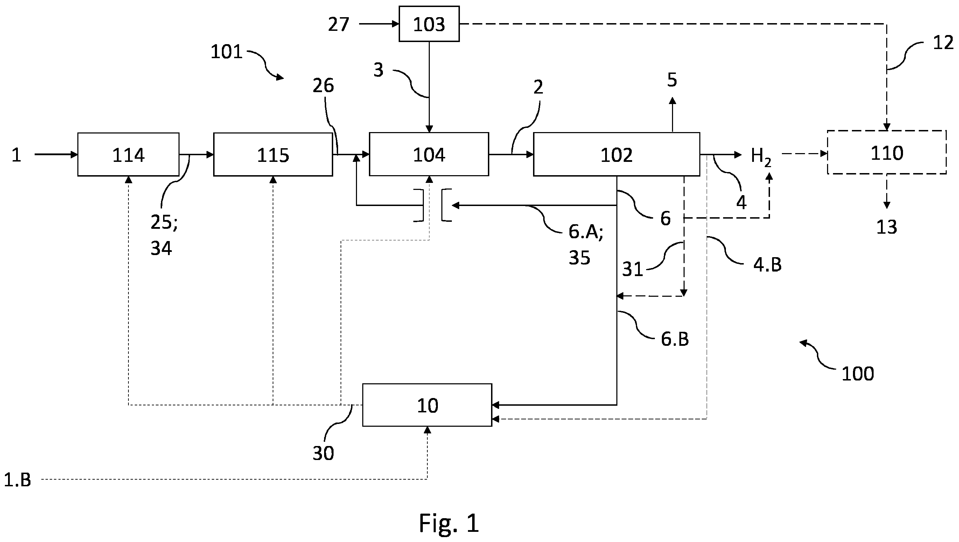

Fig. 1 shows a process or plant for the production of hydrogen 100 or for the synthesis of ammonia comprising an air separation unit (ASU) 103, a desulphurisation reactor 114, a reforming section 101, a post-treatment section 102 and an optional ammonia synthesis section 110.

The reforming section 101 comprises a pre-reformer 115 and an autothermal reformer 104 arranged in series.

The plant operates as follows: a hydrocarbon feedstock 1 is supplied to the desulphurisation reactor 114 to generate a desulphurized hydrocarbon feedstock 25. The desulphurized hydrocarbon feedstock 25 is pre-reformed in the pre-reformer 115. Output of the pre-reformer 115 is a pre-reformed hydrocarbon feedstock 26 that comprises unconverted hydrocarbons, e.g. methane.

The pre-reformed hydrocarbon feedstock 26 is then reformed in the autothermal reformer 104 in presence of oxygen-enriched air or pure oxygen 13 produced by the ASU 103 starting from environmental air 27. A nitrogen (N₂)-containing stream 12 is also produced by the ASU 103.

A raw syngas 2 is then treated in the post-treatment section 102. This section 102 is configured to provide hydrogen (H₂) 4, a CO₂-enriched stream 5, and a residual gas 6.

Hydrogen 4 may be fed to the optional ammonia synthesis section 110 together with the N₂-containing stream 12 where they are reacted in a given stoichiometric ratio and in ammonia (NH₃) synthesis conditions to obtain an ammonia-containing product 13.

The CO₂-enriched stream 5 may be exported from the plant 100, e.g. used for CO₂ sequestration (i.e. captured and stored) or used for urea synthesis in a tied-in urea synthesis plant.

The residual gas 6 is split in a first amount 6.A and in a second amount 6.B (if needed).

The first amount 6.A is recycled as feed to said reforming process 101, in particular. The first amount 6.A is mixed to the pre-reformed hydrocarbon feedstock 26 before entering the ATR 104.

The second amount 6.B (if present) is recycled as fuel to one or more fired heater(s) 10 of the process. At least part 4.B of hydrogen 4 can be used as decarbonized fuel for the fired heater(s) 10. A hydrocarbon fuel 1.B may be fed as complementary fuel to the fired heater (s)10.

Heat 30 produced by said one or more fired heater(s) 10 is transferred to one or more chosen from: the desulphurisation reactor 114, the pre-reformer 115, and the autothermal reformer 104.

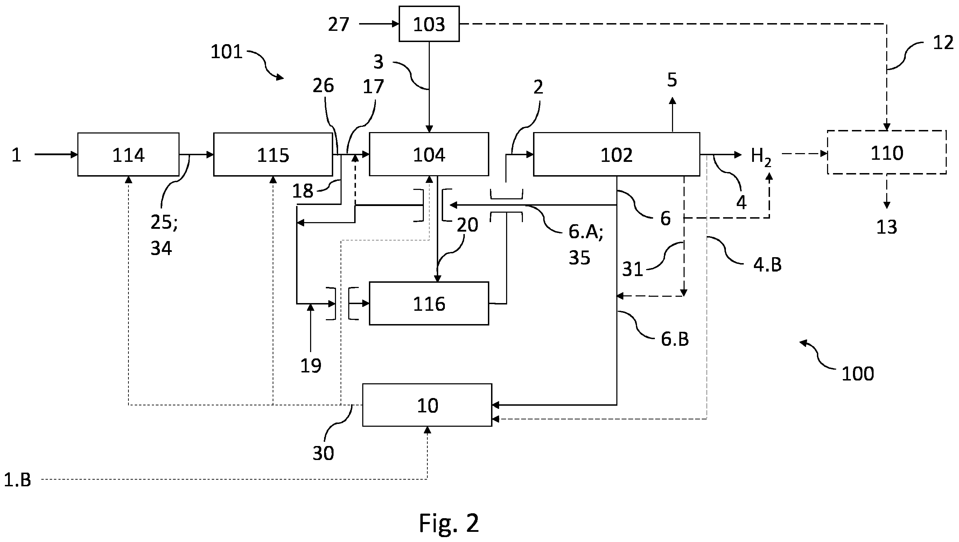

Fig. 2 shows a process or plant according to another embodiment.

As a difference with respect to the embodiment of Fig. 1, the reforming section 101 comprises the pre-reformer 115, the autothermal reformer 104, and a gas-heated reformer 116. The autothermal reformer 104 and the gas-heated reformer 116 are arranged in parallel.

The pre-reformed hydrocarbon feedstock 26 is split into a first feedstock portion 17 and a second feedstock portion 18.

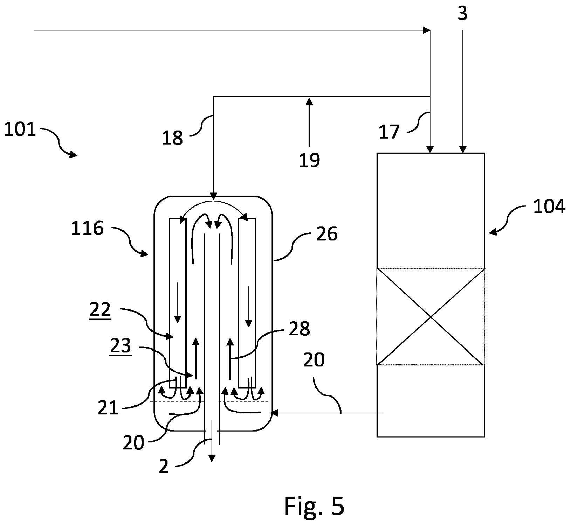

The first feedstock portion 17 is supplied to the ATR 104. An effluent of the ATR 7 is a first stream of syngas 20. The second feedstock portion 18 is supplied to a tube side (i.e., first side 22) of the GHR 116 in of the GHR to generate a second stream of syngas 21 (best shown in Fig. 5). The second stream of syngas 21 is mixed with the first stream of syngas 20 in a shell side of the GHR 116 to obtain a combined syngas 28.

In the second side 23 of the GHR 116, the combined syngas 28 exchanges heat with the second feedstock portion 18 undergoing reforming in the tube side of the GHR 116. After heat exchange, the combined syngas 28 reaches the conditions of the raw syngas 2 which is the output of the reforming section 101.

The said first amount 6.A of residual gas 6 is recycled as feed exclusively to said autothermal reformer 104, exclusively to said gas-heated reformer 116 or is split between the ATR and the GHR.

Steam 19 may be injected upstream or at the inlet of said gas-heated reformer 116.

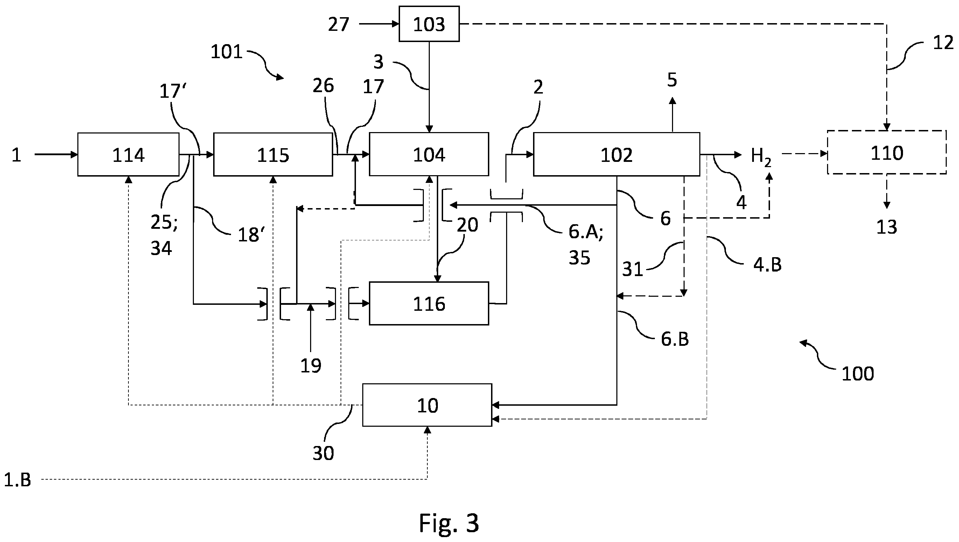

Fig. 3 shows a process or plant according to another embodiment.

As a difference with respect to the embodiment of Fig. 2, the desulphurized hydrocarbon feedstock 25 is split into the first feedstock portion 17' and into the second feedstock portion 18'.

The first feedstock portion 17' is fed to the pre-reformer 115 and then to the ATR 104. The second feedstock portion 18' is fed to the GHR 116 after optionally injecting steam 19.

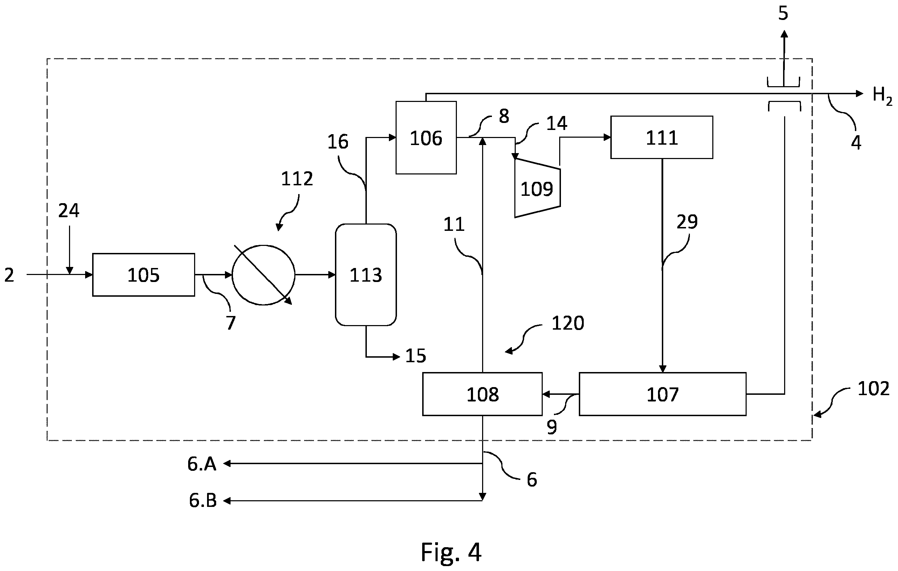

Fig. 4 is a schematic representation of the post-treatment section according to an embodiment of the invention.

The post-treatment section 102 comprising at least a water gas shift conversion reactor 105 of said raw syngas into a shifted syngas 7, a pressure swing absorption unit 106, and a cryogenic separation unit 107. Further steam 24 may be injected upstream of the water gas shift conversion reactor 105.

The shifted syngas 7 is fed to an indirect heat exchanger 112 for cooling, followed by a liquid-gas separator 113 to obtain a liquid condensate 15 and a gaseous stream 16. The liquid condensate 15 may be exported from the post-treatment section 102. The gaseous stream 16 is fed to the pressure swing absorption unit 106.

The pressure swing absorption unit 106 is arranged for producing hydrogen 4 and a first tail gas 8 comprising carbon monoxide (CO), carbon dioxide (CO₂), residual hydrogen (H₂) and unreacted hydrocarbon feedstock.

The first tail gas 8 is compressed in at least a compressor 109 and then dried in a dryer 111 to give a compressed and dried tail gas 29 reaching the cryogenic separation unit 107. In the cryogenic separation unit 107 the compressed and dried tail gas 29 is separated in the CO₂-enriched stream 5 and in a second tail gas 9.

In a further separation unit 120 - preferably comprising at least a further pressure swing absorption unit 108 - of the post-treatment section 102, the second tail gas 9 is separated in a CO₂-containing stream 11 and in the residual gas 6.

The residual gas 6 is recycled as feed to the reforming section 101 and/or as fuel to the one or more fired heater(s) 10.

The CO₂-containing stream 11 is at least partially (preferably: completely) mixed with said first tail gas 8 to give a mixed stream 14. The mixed stream 14 is fed to a suction side of the compressor 109, then to the dryer 111 and finally to the cryogenic separation unit 107.

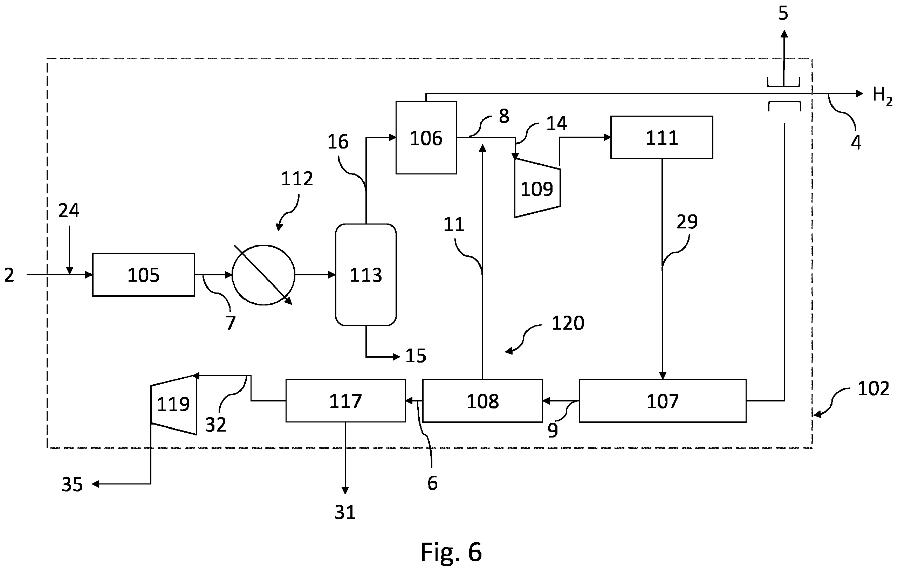

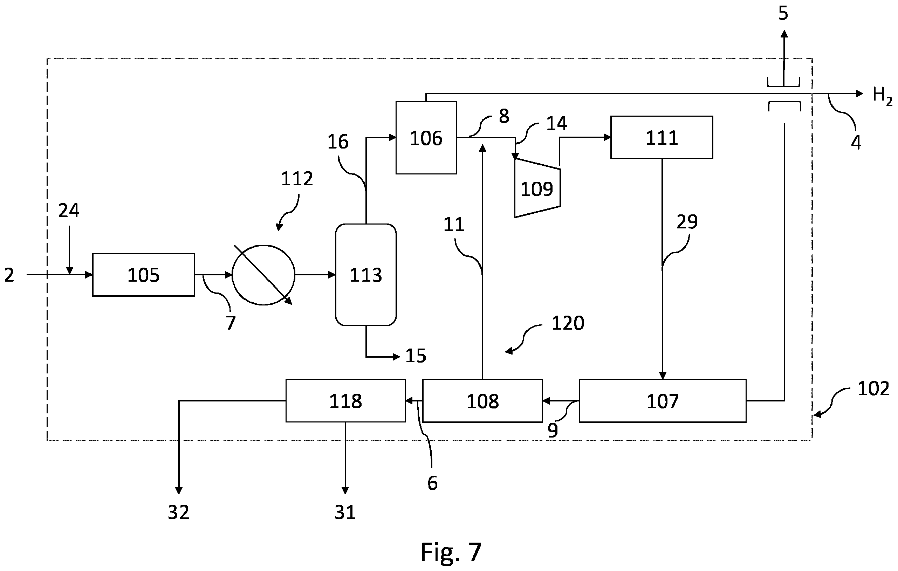

Fig. 6 and 7 are schematic representation of the post-treatment section according to another embodiment of the invention.

As a difference with respect to the embodiment of Fig. 4, the residual gas 6 is further treated in either a downstream PSA unit 117 or a downstream membrane separation unit 118.

In these embodiments the further separation step 120 of the CO₂-containing stream 11 comprises the upstream pressure swing absorption step 108 and the downstream pressure swing absorption step 117, or the upstream pressure swing absorption step 108 and the downstream membrane separation step 118.

Input of said downstream pressure swing absorption step 117 or of said downstream membrane separation step 118 is the residual gas 6 of the upstream pressure swing absorption step 108, and said downstream pressure swing absorption step 117 or said membrane separation step 118 is arranged to split such residual gas 6 into a third tail gas 32 and a further residual gas 31. The third tail gas may be exported from the post-treatment section 102.

Said third tail gas 32 is preferably recycled as feed to said reforming process. In case PSA technology is applied, the gas is further compressed in a compressor 119 before being recyled as compressed tail gas 35 as feed.

The further residual gas 31 can be sent as fuel to said one or more fired heater(s) 10 of said process.

In case PSA technology is applied, a portion or all of the further residual gas 31 be used as hydrogen product and eventually joined with stream 4.

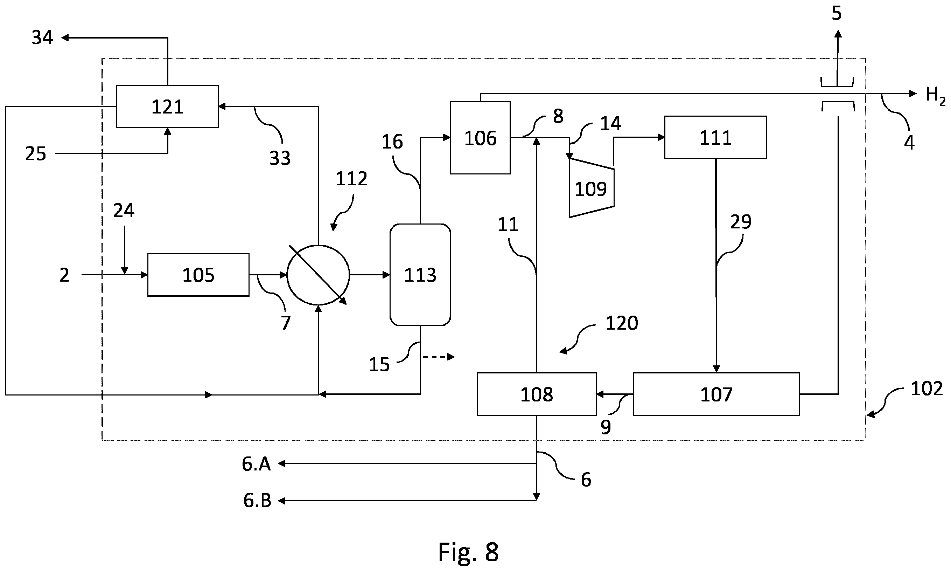

Fig. 8 is a schematic representation of the post-treatment section according to still another embodiment of the invention.

With respect to the embodiment of Fig 4, the shifted syngas 7 and at least part of said liquid condensate 15 are heat exchanged in an indirect heat exchanger 112 so that the liquid condensate 15 is heated by the (cooling) shifted syngas 7. The resulting heated liquid condensate 33 is fed as saturation liquid to said saturation step 121 performed on the hydrocarbon feedstock 1 after desulphurization.

Said heated liquid condensate 33 may be fed to the indirect heat exchanger 112 after the saturation step 121 and then be recycled to the saturation step 121.

Fig. 5 shows in detail the arrangement configuration of the ATR 104 and the GHR 116.

The ATR 104 supplied with the first feedstock portion 17 and with the oxygen-enriched air or pure oxygen 3. Output of the ATR 104 is the first stream of syngas 20 which is then supplied to the second side 23 of the GHR 11.

The GHR 116 is supplied with the second feedstock portion 18 that reacts in the tube side 22 to generate a second stream of syngas 21. The latter is mixed with the first stream of syngas 20 to yield the combined syngas 28 in the shell side 23 of the GHR 116.

It is worth mentioning that the first stream of syngas 20 leaving the ATR 104 may have a temperature comprised from 850 °C to 1100 °C. Such first stream of syngas 20 is mixed with the second stream of syngas 21 to produce the combined syngas 28 that may have a temperature comprised from 800 °C to 1050 °C. The combined syngas 28 is used to exchange heat - within the GHR 116 - with the second feedstock portion 18 undergoing reforming in the tube side 22. After heat exchange, the combined syngas 28 is cooled to the temperature of the raw syngas 2.

### LIST OF THE REFERENCE SIGNS

- 1: hydrocarbon feedstock
- 1.B: hydrocarbon fuel
- 2: raw syngas
- 3: oxygen-enriched air or pure oxygen
- 4: hydrogen or H₂
- 4.B: part of such hydrogen 4 used as fuel
- 5: CO₂-enriched stream
- 6: residual gas
- 6.A: first amount of residual gas
- 6.B: second amount of residual gas
- 7: shifted syngas
- 8: first tail gas
- 9: second tail gas
- 10: fired heater(s)
- 11: CO₂-containing stream
- 12: nitrogen- or N₂-containing stream
- 13: ammonia-containing product
- 14: mixed stream
- 15: liquid condensate
- 16: gaseous stream
- 17: first feedstock portion
- 17': first feedstock portion
- 18: second feedstock portion
- 18': second feedstock portion
- 19: steam
- 20: first stream of syngas
- 21: second stream of syngas
- 22: first side
- 23: second side
- 24: further steam
- 25: desulphurized hydrocarbon feedstock
- 26: reaction vessel
- 27: environmental air
- 28: combined syngas
- 29: compressed and dried tail gas
- 30: heat
- 31: further residual gas
- 32: third tail gas
- 33: heated liquid condensate
- 34: saturated hydrocarbon feedstock
- 35: compressed tail gas
- 100: process or plant
- 101: reforming process or section
- 102: post-treatment
- 103: air separation unit (ASU)
- 104: autothermal reforming step or autothermal reformer (ATR)
- 105: water gas shift conversion step or reactor
- 106: pressure swing absorption step or unit
- 107: cryogenic separation step or unit
- 108: further (e.g. upstream) pressure swing absorption step or unit
- 109: compression step or compressor
- 110: ammonia synthesis step or section, preferably ammonia synthesis loop
- 111: drying step or unit, preferably molecular sieve drying unit(s)
- 112: indirect heat exchange step or indirect heat exchanger
- 113: separation step or separator
- 114: desulphurisation, preferably a hydro-desulphurisation, step or reactor
- 115: pre-reforming step or pre-reformer, preferably adiabatic pre-reforming step or adiabatic pre-reformer
- 116: gas-heated reforming (GHR) step or gas-heated reformer (GHR)
- 117: downstream pressure swing absorption (PSA) step or unit
- 118: membrane separation step or unit
- 119: compression step or compressor
- 120: further separation step(s) or unit(s)
- 121: saturation step or unit

## Claims

1. A process (100) for the production of hydrogen or for the synthesis of ammonia comprising the following steps:
(a) performing a reforming process (101) of a hydrocarbon feedstock (1) to generate a raw syngas (2), said reforming process comprising at least an autothermal reforming step (104) in presence of oxygen-enriched air or pure oxygen (3) produced by an air separation unit (ASU; 103);
(b) subjecting said raw syngas (2) to a post-treatment (102) providing hydrogen (H₂; 4), a CO₂-enriched stream (5), and a residual gas (6); said post-treatment comprising at least a water gas shift conversion step (105) of said raw syngas into a shifted syngas (7), a pressure swing absorption step (106), and a cryogenic separation step (107); wherein said pressure swing absorption step produces said hydrogen and a first tail gas (8) comprising carbon monoxide (CO), carbon dioxide (CO₂), residual hydrogen (H₂) and unreacted hydrocarbon feedstock from the shifted syngas (7), and said cryogenic separation step separates the CO₂-enriched stream and a second tail gas (9) from said first tail gas;
said post-treatment (102) comprising a further separation step (102) of a CO₂-containing stream (11) and of the residual gas (6) from said second tail gas;
(c) recycling said residual gas (6) as feed to said reforming process and/or as fuel to one or more fired heater(s) (10) of said process;
(d) optionally feeding a portion (4.B) of said hydrogen (4) obtained in step (b) as fuel to one or more fired heater(s) of said process;
(e) optionally an ammonia synthesis step (110) wherein said hydrogen (4) and a nitrogen (N₂)-containing stream (12) produced by said ASU (103) are reacted in a given stoichiometric ratio and in ammonia (NH₃) synthesis conditions to obtain an ammonia-containing product (13).

2. The process according to claim 1, wherein - in step (c) - a first amount (6.A) of said residual gas (6) is recycled as feed to said reforming process (101) and a second amount (6.B) of said residual gas (6) is recycled as fuel to said one or more fired heater(s) (10);
volumetric flow rates of said first amount to said second amount being preferably in a ratio comprised from 1:200 to 200:1, more preferably comprised from 1:100 to 100:1, even more preferably comprised from 1:50 to 50:1, still more preferably comprised from 1:25 to 25:1.

3. The process according to any of the previous claims, wherein said further separation step (120) of the CO₂-containing stream (11) in step (b) comprises at least a further pressure swing absorption step (108), and wherein said CO₂-containing stream is at least partially mixed with said first tail gas (8) to give a mixed stream (14); said mixed stream being fed to said cryogenic separation step (107).

4. The process according to any of the previous claims optionally when depending from claim 3, wherein said post-treatment (102) comprises at least a compression step (109) and a drying step (111) of said first tail gas (8), or optionally of said mixed stream (14), upstream of said cryogenic separation step (107).

5. The process according to any of the previous claims, wherein the shifted syngas (7) is subjected to an indirect heat exchange step (112) for cooling followed by a separation step (113) to obtain a liquid condensate (15) and a gaseous stream (16); said gaseous stream being fed to the pressure swing absorption step (106) of step (b).

6. The process according to any of the previous claims, wherein the reforming process (101) is preceded by a desulphurisation step (114) of the hydrocarbon feedstock (1), said reforming process (101) further comprising a pre-reforming step (115) upstream to said autothermal reforming step (104) and upstream of an optional gas-heated reforming step;
preferably wherein a steam to carbon ratio at the inlet of the pre-reforming step is not greater than 1.5, more preferably comprised from 0.5 to 1.5 or, and even more preferably comprised from 0.6 to 0.9 or 0.7 to 1.2, for example of about 0.8.

7. The process according to any of the previous claims, wherein said reforming process (101) comprises a gas-heated reforming step (116) carried out in parallel with said autothermal reforming step (104).

8. The process according to claim 7, comprising splitting said hydrocarbon feedstock (1) into a first feedstock portion (17, 17') and into a second feedstock portion (18, 18'), said autothermal reforming step (104) being performed on said first feedstock portion and said gas-heated reforming step (116) being performed on said second feedstock portion, and heat being transferred from said autothermal reforming step to said gas-heated reforming step;
preferably said first feedstock portion (17, 17') comprising from 70 vol% to 98 vol% of the hydrocarbon feedstock (1).

9. The process according to claims 2 and 7, wherein said first amount (6.A) of said residual gas (6) is recycled as feed exclusively to said autothermal reforming step (104) or exclusively to said gas-heated reforming step (116).

10. The process according to any of the previous claims, comprising transferring heat (30) from said one or more fired heater(s) (10) to a desulphurisation step (114) of the hydrocarbon feedstock (1), and/or to a pre-reforming step (115) upstream to said autothermal reforming step (104), and/or to said autothermal reforming step (104).

11. The process according to any of the previous claims, comprising a step of injecting steam (19) upstream of said gas-heated reforming step (116) to achieve a steam to carbon ratio at the inlet of the gas-heated reforming step higher than 2, preferably higher than 5.

12. The process according to claim 5, wherein said shifted syngas (7) and at least part of said liquid condensate (15) are heat exchanged in an indirect heat exchanger (112) so that the liquid condensate (15) is heated by the shifted syngas (7); a heated liquid condensate (33) being fed as saturation liquid to a saturation step (121) performed on the hydrocarbon feedstock (1) after desulphurization to obtain a saturated hydrocarbon feedstock (34); optionally, said heated liquid condensate (33) after the saturation step (121) is fed to the indirect heat exchanger (112) then recycled to the saturation step (121).

13. A plant (100) for the production of hydrogen or for the synthesis of ammonia comprising:
- an air separation unit (ASU; 103) configured to produce oxygen-enriched air or pure oxygen (3);
- a reforming section (101) configured to convert a hydrocarbon feedstock (1) into a raw syngas (2) in presence of said oxygen-enriched air or pure oxygen (3), wherein said reforming section comprises at least an autothermal reformer (104);
- a post-treatment section (102) configured to provide hydrogen (H₂; 4), a CO₂-enriched stream (5), and a residual gas (6);
said post-treatment section comprising at least a water gas shift conversion reactor (105) of said raw syngas into a shifted syngas (7), a pressure swing absorption unit (106), and a cryogenic separation unit (107);
wherein said pressure swing absorption unit is arranged for producing said hydrogen and a first tail gas (8) comprising carbon monoxide (CO), carbon dioxide (CO₂), residual hydrogen (H₂) and unreacted hydrocarbon feedstock from the shifted syngas, and said cryogenic separation unit is configured to separate the CO₂-enriched stream and a second tail gas (9) from said first tail gas;
said post-treatment section 102 comprising a further separation unit (120) arranged for separating a CO₂-containing stream (11) and the residual gas (6) from said second tail gas (9);
- one or more lines for recycling said residual gas (6) as feed to said reforming section (101) and/or as fuel to one or more fired heater(s) (10) of said plant (100);
- optionally one or more lines for feeding a portion of said hydrogen as fuel to one or more fired heater(s) of said plant;
- optionally an ammonia synthesis section (110) arranged for reacting said hydrogen (4) and a nitrogen (N₂)-containing stream (12) produced by said ASU (103) in a given stoichiometric ratio and in ammonia (NH₃) synthesis conditions to obtain an ammonia-containing product (13).

14. The plant according to claim 13, wherein a first line is arranged for recycling a first amount (6.A) of said residual gas (6) as feed to said reforming process and a second line is arranged for recycling a second amount (6.B) of said residual gas (6) as fuel to said one or more fired heater(s) (10).

15. The plant according to any of claims 13-14, wherein said further separation unit (120) comprises at least a further pressure swing absorption unit (108), and wherein said plant comprises a line for mixing at least part of said CO₂-containing stream (11) with said first tail gas (8) to give a mixed stream (14) feeding said cryogenic separation unit (107).

16. The plant according to any of claims 13-15, wherein said reforming section (101) comprises a gas-heated reformer (116) arranged in parallel with said autothermal reformer (104), and wherein:
- said autothermal reformer (104) is arranged to receive a first feedstock portion (17, 17') of said hydrocarbon feedstock (1) and to generate a first stream of syngas (20);
- said gas-heated reformer comprising a first side (22) and a second side (23), wherein said gas-heated reformer is arranged to receive a second feedstock portion (18, 18') of said hydrocarbon feedstock (1) in said first side and to generate a second stream of syngas (21) in the same side, and said first stream of syngas and said second stream of syngas are mixed in said second side to generate said raw syngas (2);
preferably said gas-heated reformer (116) being a shell and tube reformer; more preferably wherein said first side (22) is a tube side and said second side (23) is a shell side.
